# EUROPÄISCHE PATENTSCHRIFT

(11) **EP 0 885 939 B1**
(45) Veröffentlichungstag und Bekanntmachung des Hinweises auf die Patenterteilung: **19.07.2000**
(21) Anmeldenummer: 98107540.1
(22) Anmeldetag: 24.04.1998
(51) Int. Cl.: C09D 11/00

(54) **Tinte zur Verwendung in Tintenstrahldruckern**
Ink for use use ink-jet printing
Encre pour utilisation pour l'impression par jet d'encre

(30) Priorität: 19.06.1997 DE 19726043
(43) Veröffentlichungstag der Anmeldung: 23.12.1998
(73) Patentinhaber: PELIKAN PRODUKTIONS AG, 8132 Egg (CH)
(72) Erfinder: Howald, Nicole, 8654 Jona (CH); Drescher, Peter, 8632 Tann/ZH (CH)
(74) Vertreter: Hagemann, Heinrich, Dr.rer.nat., Dipl.-Chem.

(56) Entgegenhaltungen:
- WO-A-96/24642
- WO-A-97/17409
- GB-A- 1 209 791

## Beschreibung

Die vorliegende Erfindung betrifft eine Tinte zur Verwendung in Tintenstrahldruckern.

Der Tintenstrahldruck (Ink-Jet-Druck) findet, insbesondere für sogenannte "Desk Top Publishing"-Anwendungen, zunehmende Verbreitung, was insbesondere auf seine Fähigkeit zurückzuführen ist, mehrfarbige Ausdrucke durch Auftrag von drei oder mehreren Primärtinten auf ein Substrat in einem einzigen Durchlauf zu erstellen. Andere Druckverfahren erfordern im allgemeinen für jede Primärfarbe einen Durchlauf durch den Drucker. Ein wichtiger Vorteil der Tintenstrahldrucker liegt außerdem in deren günstigem Preis.

Thermische Tintenstrahldruckysteme spielen eine besonders wichtige Rolle. Diese weisen ein Tintenreservoir in flüssigkeitsleitender Verbindung mit einem Druckkopf auf, auf dem sich eine Mehrzahl von Widerständen befinden. Die selektive Aktivierung der Widerstände verursacht eine thermische Anregung der Tinte und deren Herausschleudern. Beispielhafte thermische Tintenstrahldrucksysteme werden in den US-PSen 5 500 895 und 4 794 409 beschrieben.

Andere Systeme beruhen auf der sogenannten Piezo-Technik, bei der ein Piezo-Element durch einen Stromimpuls angeregt wird, wodurch ein Tintentropfen herausgeschleudert wird.

Die zur Verwendung in Tintenstrahldruckern vorgesehenen Tinten müssen eine Reihe von Kriterien erfüllen. Z.B. dürfen sie bei Druckpausen im Druckkopf keine Veränderung erfahren, die zu einer Verstopfung der Tintenstrahldüsen führen könnte. Zur Verhinderung des Verstopfens der Düsen werden oft pigmentierte Tinten auf Basis hochsiedender aliphatischer Kohlenwasserstoffe eingesetzt. Derartige Tinten weisen gegenüber Tinten auf Wasserbasis oder auf Basis von polaren organischen Lösemitteln folgende Vorteile auf: Die Tinte migriert rasch in poröse Substrate, wie Papier, Karton usw. Sie trocknet im Bereich der Düsen in Druckpausen nicht ein und führt so zu einer hohen Zuverlässigkeit. Die Drucke sind selbst auf porösen Substraten absolut wasserfest. Die Metallteile im Druckkopf unterliegen keiner Korrosion, da die Tinte keine elektrische Leitfähigkeit aufweist. Oftmals dienen Polyamin-Fettsäure-Kondensationspolymere als Dispergatoren für die in der Tinte enthaltenen Pigmente. Eine derartige Tinte ist z.B. in der WO 96/24642 offenbart.

Die bekannten Tinten weisen allerdings eine Reihe von Nachteilen auf. So können die als Dispergatoren eingesetzten Chemikalien zur Reizung von Augen, Haut und Schleimhäuten führen. Ferner neigen diese Tinten dazu, durch Kapillarkräfte, die z.B. auf die gewöhnlich verwendeten Papiersubstraten zurückgehen, in das Innere des Substrats gesogen zu werden. Damit steht ein Großteil des Tintenpigments nicht mehr an der Oberfläche des Substrats zur Verfügung, was zu einer unzureichenden optischen Dichte beim Bedrucken von porösen Substraten führt.

Ein weiteres Problem stellt sich beim Herstellen mehrfarbiger Bilder durch den Tintenstrahldruck ein, wenn eine Tinte einer Farbe auf oder in unmittelbarer Nähe neben einer Tinten einer anderen Farbe aufgetragen wird. Das Problem äußert sich in einem Vermischen oder Ineinanderlaufen der Tinten an deren Grenzfläche, wodurch die Grenzlinie zwischen den Tinten unklar wird. Dieses Phänomen ist Fachleuten auf dem Gebiet der Drucktechnologie auch unter der Bezeichnung "Colour-Bleeding" bekannt.

Schließlich weisen die bekannten Tinten auf der Basis von unpolaren Kohlenwasserstoffen eine unzureichende Dispersionsstabilität auf, was bei einer längeren Lagerung zu Inhomogenitäten bzw. Zur Bildung von Sedimenten führt.

Der Erfindung liegt daher die Aufgabe zugrunde, eine Tinte zur Verwendung in Tintenstrahldruckern bereitzustellen, die die aufgezeigten Nachteile nicht oder nur vermindert aufweist und die insbesondere ein vermindertes Colour-Bleeding, ein vermindertes Penetrieren des Farbmittels in die Papieroberfläche, eine verbesserte optische Dichte und eine verbesserte Lagerstabilität aufweist.

Erfindungsgemäß wird diese Aufgabe durch eine Tinte gelöst, die die Bestandteile (a) bis (c) umfaßt:
**(a)** ein Lösemittel, das zu mindestens etwa 80% aus einem unpolaren, nicht-wäßrigen Lösemittel besteht,
**(b)** ein im Lösemittel dispergiertes Pigment und
**(c)** ein Copolymer von Vinylpyrrolidon mit einem oder mehreren langkettigen α-Olefinen mit mindestens 6 Kohlenstoffatomen, insbesondere mit 6 bis 24 Kohlenstoffatomen.

Die GB-A 1 209 791 offenbart die Verwendung von alkyliertem Polyvinylpyrrolidon als Dispergiermittel bei der Herstellung von Pigment-Dispersionen in organische Lösemittel mit einem sehr hohen Feststoffanteil von z.B. 30 bis 65 Gewichts%. Diese Konzentrate können unter anderem bei der Herstellung von Druckfarben eingesetzt werden. Das Dispergiermittel wird eingesetzt, um das Konzentrat, das sonst eine nicht fließfähige Paste bildet, fließfähig zu machen. Das Problem der Dispersionsstabilität von Tinten auf Pigmentbasis mit einem sehr viel niedrigeren Pigmentgehalt wird hier nicht angesprochen.

Die erfindungsgemäße Tinte enthält ein Copolymer von Vinylpyrrolidon mit einem oder mehrern langkettigen α-Olefinen mit mindestens 6 Kohlenstoffatomen. Bevorzugt wird der Bereich von 6 bis 24 Kohlenstoffatomen, insbesondere von 12 bis 20 Kohlenstoffatomen. Derartige Copolymere werden auch als alkylierte Vinylpyrrolidonpolymere bzw. alkyliertes PVP bezeichnet. Sie werden durch Copolymerisation von Vinylpyrrolidon und langkettigen α-Olefinen erhalten. Hierbei erfolgt neben der Bildung linearer Copolymere des heterocyclischen Monomers und des langkettigen α-Olefins eine Einführung langkettiger Alkylreste in die Vinylpyrrolidonstruktur. Die Copolymere können durch folgende allgemeine Formel beschrieben werden: 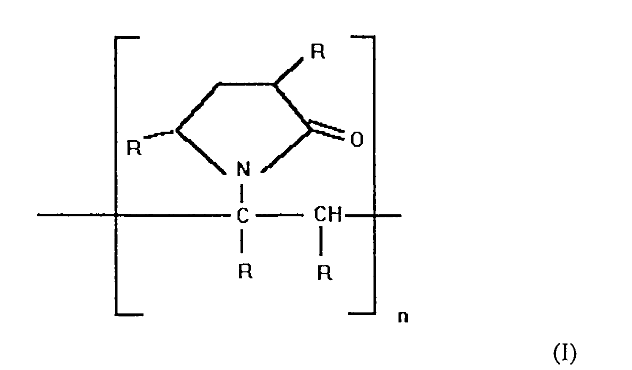 worin R für H oder einen langkettigen Alkylrest steht.

Durch Variieren des Molekulargewichts der Alkylgruppe und des Gewichtsverhältnisses von α-Olefin zu Vinylpyrrolidon wird eine Vielzahl von Polymeren mit unterschiedlichen Eigenschaften erhalten. Die Copolymere sind ungiftig und toxikologisch nicht bedenklich.

Bevorzugte Copolymere werden durch Copolymerisation von Vinylpyrrolidon mit α-Olefinen mit 12 bis 20 Kohlenstoffatomen erhalten. Besonders bevorzugt sind als langkettiges α-Olefin Hexadecen oder Eicosen. Bevorzugte Copolymere weisen ein durchschnittliches Molekulargewicht (bestimmt mittels Hochgeschindigkeits-Membran-Osmometer) von etwa 5000 bis 12000, insbesondere etwa 7000 bis 10000, auf. Es ist außerdem bevorzugt, daß das Copolymer einen Schmelzbereich von unter Raumtemperatur bis etwa 100°C, insbesondere von unter Raumtemperatur bis etwa 40°C, aufweist. Das Copolymer ist vorzugsweise im Lösemittel weitgehend gelöst.

Die bevorzugten Copolymere sind in aliphatischen Kohlenwasserstoffen, wie n-Pentan, n-Heptan oder Methylcyclohexan vollständig löslich, in polaren Lösemitteln, wie Wasser, n-Propanol, Ethanol oder Methanol, dagegen unlöslich.

Das in der erfindungsgemäßen Tinte verwendete Pigment kann ein, üblicherweise in Tintenstrahldrucktinten verwendetes beliebiges Pigment sein. Bevorzugte Pigmente sind diejenigen, die im "The Colour Index" als Pigmentfarbstoffe ausgewiesen sind. Das Pigment sollte lichtecht und temperaturstabil sein. Das Pigment sollte nach dem Auftrag auf das Substrat wasserunlöslich sein, um ein Verschmieren beim Kontakt mit wasserhaltigen Substanzen zu vermeiden. Ein besonders bevorzugtes schwarzes Pigment ist Ruß.

Die Teilchengröße des dispergierten Pigments liegt vorzugsweise zwischen etwa 5 und 500 nm, insbesondere zwischen etwa 5 und 300 nm. Es ist außerdem bevorzugt, daß das spezifische Gewicht des Pigments nahe dem des gewählten Lösemittels liegt, da auf diese Weise die Stabilität der Tinte gegenüber Sedimentbildung weiter verbessert wird.

Die einzusetzende Menge an Pigment hängt weitgehend von dessen Natur ab, im allgemeinen liegt sie im Bereich von etwa 2 bis 20 Gew.-%, bezogen auf die Tinte, und insbesondere zwischen 4 und 15 Gew.-%.

Die erfindungsgemäße Tinte enthält außerdem ein Lösemittel, das zu mindestens 80%, insbesondere zu mindestens etwa 95% und besonders bevorzugt im wesentlichen vollständig aus einem unpolaren nicht-wäßrigen Lösemittel besteht. Vorzugsweise enthält das Lösemittel mindestens etwa 80%, insbesondere mindestens etwa 95% eines oder mehrerer aliphatischer Kohlenwasserstoffe (oder besteht im wesentlichen daraus). Ein geeignetes Gemisch aliphatischer Kohlenwasserstoffe ist z.B. ein Destillat aus der Fraktionierung natürlicher oder synthetischer Kohlenwasserstoffgemische, das z.B. unter dem Handelsnamen EXXSOL von der Exxon Chemical GmbH, Köln, vertrieben wird. Vorzugsweise weist das unpolare nicht-wäßrige Lösemittel einen Siedepunkt von über etwa 100°C, vorzugsweise über etwa 200°C und insbesondere im Bereich von 230 bis 325°C auf. Das Lösemittel kann kleinere Mengen an polaren Lösemitteln, wie Ester, Ether, Amide oder Alkohole, enthalten, um z.B. das Pigment der allgemeinen Formel (I) oder weitere Tintenbestandteile in Lösung zu bringen. Es ist jedoch bevorzugt, daß die polaren Lösemittel eine Menge von etwa 5 Gew.-%, bezogen auf die Tinte, nicht überschreiten.

Die einzusetzende Menge an Copolymer richtet sich in erster Linie nach der Art und Menge des verwendeten Pigments. Die eingesetzte Menge an Copolymer muß ausreichen, um allein oder in Kombination mit einem oder weiteren Dispergiermitteln das eingesetzte Pigment ausreichend im Lösemittel zu stabilisieren und ferner die erfindungsgemäß angestrebten Ziele ausreichend zu verwirklichen. Die hierzu erforderliche Menge kann der Fachmann anhand einfacher Versuche leicht ermitteln. Als allgemeiner quantitativer Rahmen lassen sich etwa 5 bis 25 Gew.-%, bezogen auf die Gesamtmenge aus unpolarem, nicht-wäßrigem Lösemittel, dispergiertem Pigment und Copolymer von Vinylpyrrolidon mit langkettigem α-Olefin, insbesondere etwa 10 bis 20 Gew.-%, angeben. Als besonders geeignete Rahmenbedingung gilt eine erfindungsgemäße Tinte, die dadurch gekennzeichnet ist, daß sie, bezogen auf die Gesamtmenge von unpolarem, nicht-wäßrigem Lösemittel, dispergiertem Pigment und dem Copolymer von Vinylpyrrolidon und dem langkettigen α-Olefin, etwa 60 bis 90 Gew.-% unpolares, nicht-wäßriges Lösemittel, etwa 5 bis 25 Gew.-% Copolymer und etwa 2 bis 15 Gew.-% dispergiertes Pigment enthält.

Die erfindungsgemäße Tinte kann neben den Bestandteilen (a) bis (c) noch weitere übliche Tintenadditive enthalten. Derartige Additive können z.B. zur Steuerung des Netzverhaltens der Tinte dienen. Weitere übliche Additive, die in der erfindungsgemäßen Tinte eingesetzt werden können, sind z.B. Dispergierhilfsmittel, oberflächenaktive Substanzen (Netzmittel), Harze und Wachse. Die Additive können auch einen gewissen Einfluß auf die Viskosität ausüben. Vorzugsweise beträgt die Viskosität der erfindungsgemäßen Tinte etwa 1 bis 50 cSt.

Die vorteilhaften Eigenschaften der erfindungsgemäßen Tinte beruhen vermutlich auf folgenden Zusammenhängen: Beim erfindungsgemäß einzusetzenden Copolymer handelt es sich um ein amphiphiles Polymer, das über eine polare Struktureinheit und über einen unpolaren Alkylrest verfügt. Das Copolymer ist im unpolaren nicht-wäßrigen Lösemittel löslich und wirkt als Dispergator für das im Lösemittel unlösliche Pigment. Der Dispergator umhüllt das Pigment, so daß eine "physikalische" Lösung ensteht. In dem unpolaren, nicht-wäßrigen, vorzugsweise aliphatischen, Lösemittel ist der Alkylrest des Copolymers in der Lage, sich weitgehend frei zu entfalten bzw. zu strecken und eine bessere Stabilisierung zu bewirken. Das Copolymer, das sich an der Oberfläche der Pigmentteilchen angelagert hat, führt zu einer Erhöhung der scheinbaren Teilchengröße der Pigmentteilchen. Hierdurch werden die Pigmentteilchen beim Treffen auf das Substrat an dessen Oberfläche festgehalten. Es wird verhindert, daß diese in die Substratoberfläche eindringen. Dieser Effekt führt zu einer höheren optischen Dichte bei gleicher Pigmentkonzentration. Durch diesen Effekt wird auch das Zerfließen des Tintentropfens eingeschränkt, was zu einer größeren Randschärfe und zu einer Verminderung des Colour-Bleedings führt.

Die Erfindung soll nun durch die nachfolgenden Beispiele veranschaulicht werden.

Zur Charakterisierung der erfindungsgemäßen Tinten und Vergleichstinten wurden folgende allgemeine Verfahren eingesetzt:

Zur Ermittlung der Stabilität wurden die erfindungsgemäßen Tinten bzw. Vergleichstinten mittels eines Dynometers (Sedimentationswaage) von BYK Labotron vermessen. Dieses Gerät gestattet während einer bestimmten Zeitdauer die Wägung absinkender Teilchen in einer Flüssigkeit. Die Messung der Kraft erfolgt über einen induktiven Kraftaufnehmer. Dabei wird die Kraft in eine elektrische Größe umgewandelt. Meßtechnisch wird das Gewicht der sinkenden Teilchen, die auf einem Teller gesammelt werden, als Funktion der Zeit erfaßt und registriert. Dazu wird der Waagenteller an den Kraftaufnehmer angeschlossen, die Probe gut durchgerührt, der Teller abgesenkt und in die Probe eingetaucht. Anschließend wir ein Nullabgleich vorgenommen und die Gewichtszunahme des sich absetzenden Sediments in Abhängigkeit von der Zeit mit einem TY-Schreiber registriert. Die Meßwerte sind als Kraftanstieg im mN über 72 h angegeben.

Die Messung der Pigmenteilchengrößen erfolgte auf einem Autosizer 4700 nach dem Verfahren der Photonenkorrelationsspektroskopie (PCS).

### Beispiel 1

Nach folgender Rezeptur wurde eine erfindungsgemäße Tinte hergestellt. Darin ist EXXSOL D-140 ein Gemisch aliphatischer Kohlenwasserstoffe von Exxon mit einem Siedepunkt von 287°C; Antaron V-216 ist ein PVP/Hexadecen-Copolymer von GAF, Chemicals, Schweiz; Elftex 495 ist ein Rußpigment der Cabot Corporation:

| | |
|---|---|
| EXXSOL D-140 | 82,2 Gew.-% |
| Antaron V-216 | 10,2 Gew.-% |
| Elftex 495 | 7,6 Gew.-% |

### Beispiel 2 (Vergleichsbeispiel)

Nach folgender Rezeptur wurde eine Vergleichstinte hergestellt (entsprechend dem Beispiel 1 der WO 96/24642):

| | |
|---|---|
| EXXSOL D-140 | 65,05 Gew.-% |
| Oleylalkohol | 20 Gew.-% |
| Polyester-Amin-Dispergiermittel, 40%ige Lösung in aliphatischem Kohlenwasserstoff (SOLSPERSE 13940) | 3,75 Gew.% |
| substituiertes Ammoniumphthalocyaninsulfonat (SOLSPERSE 5000) | 0,2 Gew.-% |
| REGAL Black (Rußpigment) | 11 Gew.-% |

### Beispiel 3

Die erfindungsgemäße Tinte und die Vergleichstinte wurden der vorstehend beschriebenen Sedimentationsuntersuchung unterzogen. Die Ergebnisse sind in folgender Tabelle zusammengefaßt:

**Tabelle I**

| Kraftanstieg durch sedimentierte Teilchen über 72 h | |
|---|---|
| Beispiel 1 | 0,036 mN |
| Beispiel 2 | 0,066 mN |

Die Ergebnisse zeigen, daß die Vergleichstinte instabiler ist.

### Beispiel 4

Mit der erfindungsgemäßen Tinte bzw. der Vergleichstinte wurden auf Butterfly-Papier und mit einem Testdrucker verschiedene Druckmuster hergestellt. Die Druckmuster wurden unter dem Lichtmikroskop optisch ausgewertet. Die Ergebnisse sind in der Tabelle II zusammengefaßt.

**Tabelle II**

| Druckverhalten | | |
|---|---|---|
| | *Beispiel 1* | *Beispiel 2* |
| Auflösung | + | ° |
| Konturenschärfe | + | - |
| + = gut; ° = mäßig; - = unzureichend | | |

## Patentansprüche

1. Tinte zur Verwendung in Tintenstrahldruckern, umfassend
**(a)** ein Lösemittel, das zu mindestens etwa 80% aus einem unpolaren, nicht-wäßrigen Lösemittel besteht,
**(b)** ein im Lösemittel dispergiertes Pigment und
**(c)** ein Copolymer von Vinylpyrrolidon mit einem oder mehreren langkettigen α-Olefinen mit mindestens 6 Kohlenstoffatomen, insbesondere mit 6 bis 24 Kohlenstoffatomen.

2. Tinte nach Anspruch 1, dadurch gekennzeichnet, daß das langkettige α-Olefin 12 bis 20 Kohlenstoffatome aufweist.

3. Tinte nach Anspruch 1 oder 2, dadurch gekennzeichnet, daß das langkettige α-Olefin Hexadecen oder Eicosen ist.

4. Tinte nach einem der Ansprüche 1 bis 3, dadurch gekennzeichnet, daß das Copolymer einen Schmelzbereich von unter Raumtemperatur bis etwa 100°C aufweist.

5. Tinte nach mindestens einem der vorhergehenden Ansprüche, dadurch gekennzeichnet, daß das Copolymer ein durchschnittliches Molekulargewicht von etwa 5000 bis 12000 aufweist.

6. Tinte nach mindestens einem der vohergehenden Ansprüche, dadurch gekennzeichnet, daß die durchschnittliche Teilchengröße des dispergierten Pigments zwischen etwa 5 und 500 nm liegt.

7. Tinte nach mindestens einem der vorhergehenden Ansprüche, dadurch gekennzeichnet, daß das unpolare, nicht-wäßrige Lösemittel ein aliphatischer Kohlenwasserstoff oder ein Gemisch aliphatischer Kohlenwasserstoffe ist.

8. Tinte nach Anspruch 7, dadurch gekennzeichnet, daß die aliphatischen Kohlenwasserstoffe alicyclische und/oder cycloaliphatische Kohlenwasserstoffe enthalten.

9. Tinte nach mindestens einem der vorhergehenden Ansprüche, dadurch gekennzeichnet, daß die Tinte eine Viskosität von etwa 1 bis 50 cSt aufweist.

10. Tinte nach mindestens einem der vorhergehenden Ansprüche, dadurch gekennzeichnet, daß das Pigment Ruß ist.

11. Tinte nach mindestens einem der vorhergehenden Ansprüche, dadurch gekennzeichnet, daß sie, bezogen auf die Gesamtmenge von unpolarem, nicht-wäßrigem Lösemittel, Copolymer und dispergiertem Pigment, etwa
etwa 60 bis 90 Gew.-% unpolares, nicht-wäßriges Lösemittel,
etwa 5 bis 25 Gew.-% Copolymer und
etwa 2 bis 15 Gew.-% dispergiertes Pigment enthält.

## Claims

1. Ink for use in ink jet printers comprising
(a) a solvent, which is at least approximately 80% nonpolar, nonaqueous solvent,
(b) a pigment dispersed in the solvent and
(c) a copolymer of vinyl pyrrolidone with one or more long chain α-olefins with at least 6 carbon atoms, particularly with 6 to 24 carbon atoms.

2. Ink according to claim 1, characterized in that the long chain α-olefin has 12 to 20 carbon atoms.

3. Ink according to claim 1 or 2, characterized in that the long chain α-olefin is hexadecen or eicosen.

4. Ink according to one of the claims 1 to 3, characterized in that the copolymer has a melting range from below ambient temperature to approximately 100°C.

5. Ink according to at least one of the preceding claims, characterized in that the copolymer has an average molecular weight of approximately 5000 to 12000.

6. Ink according to at least one of the preceding claims, characterized in that the average particle size of the dispersed pigment is between approximately 5 and 500 nm.

7. Ink according to at least one of the preceding claims, characterized in that the nonpolar, nonaqueous solvent is an aliphatic hydrocarbon or a mixture of aliphatic hydrocarbons.

8. Ink according to claim 7, characterized in that the aliphatic hydrocarbons contain alicyclic and/or cycloaliphatic hydrocarbons.

9. Ink according to at least one of the preceding claims, characterized in that the ink has a viscosity of approximately 1 to 50 cSt.

10. Ink according to at least one of the preceding claims, characterized in that the pigment is carbon black.

11. Ink according to at least one of the preceding claims, characterized in that, based on the total quantity of nonpolar, nonaqueous solvent, copolymer and dispersed pigment it contains approximately 60 to 90 wt.% nonpolar, nonaqueous solvent, approximately 5 to 25 wt.% copolymer and approximately 2 to 15 wt.% dispersed pigment.

## Revendications

1. Encre destinée à être utilisée dans des imprimantes à jet d'encre, comprenant
(a) un solvant qui est constitué d'au moins environ 80 % d'un solvant non polaire non aqueux,
(b) un pigment dispersé dans le solvant, et
(c) un copolymère de vinylpyrrolidone et d'une ou plusieurs α-oléfines à longue chaîne ayant au moins 6 atomes de carbone, en particulier 6 à 24 atomes de carbone.

2. Encre suivant la revendication 1, caractérisée en ce que l'α-oléfine à longue chaîne présente 12 à 20 atomes de carbone.

3. Encre suivant la revendication 1 ou 2, caractérisée en ce que l'α-oléfine à longue chaîne est l'hexadécène ou l'eicosène.

4. Encre suivant l'une des revendications 1 à 3, caractérisée en ce que le copolymère présente une plage de fusion allant d'une valeur inférieure à la température ambiante jusqu'à environ 100°C.

5. Encre suivant au moins l'une des revendications précédentes, caractérisée en ce que le copolymère présente un poids moléculaire moyen d'environ 5000 à 12 000.

6. Encre suivant au moins l'une des revendications précédentes, caractérisée en ce que le diamètre moyen des particules du pigment dispersé se situe entre environ 5 et 500 nm.

7. Encre suivant au moins l'une des revendications précédentes, caractérisée en ce que le solvant non aqueux non polaire est un hydrocarbure aliphatique ou un mélange d'hydrocarbures aliphatiques.

8. Encre suivant la revendication 7, caractérisée en ce que les hydrocarbures aliphatiques contiennent des hydrocarbures alicycliques et/ou cycloaliphatiques.

9. Encre suivant au moins l'une des revendications précédentes, caractérisée en ce qu'elle a une viscosité d'environ 1 à 50 cSt.

10. Encre suivant au moins l'une des revendications précédentes, caractérisée en ce que le pigment est du noir de fumée.

11. Encre suivant au moins l'une des revendications précédentes, caractérisée en ce qu'elle contient, par rapport à la quantité totale de solvant non aqueux non polaire, de copolymère et de pigment dispersé,
environ 60 à 90 % en poids de solvant non aqueux non polaire,
environ 5 à 25 % en poids de copolymère et
environ 2 à 15 % en poids de pigment dispersé.
